# FASCICULE DE BREVET EUROPEEN

(11) **EP 0 881 260 B1**
(45) Date de publication et mention de la délivrance du brevet: **15.01.2003**
(21) Numéro de dépôt: 98401157.7
(22) Date de dépôt: 14.05.1998
(51) Int. Cl.: C08L 25/04, C08L 9/06, C08K 3/04, B60J 10/06, E06B 7/23

(54) **Composition d'élastomère et son utilisation comme agent glissant sur des profiles en élastomère ou en plastomère**
Elastomerzusammensetzung und ihre Verwendung als Gleitmittel über Elastomer- oder Plastomerprofilen
Elastomer composition and its use as gliding agent on elastomer or plastomer profiles

(30) Priorité: 26.05.1997 FR 9706376
(43) Date de publication de la demande: 02.12.1998
(73) Titulaire: Metzeler Automotive Profile Systems Transieres S.A., 92000 Nanterre (FR)
(72) Inventeur: Vinceneux, Nicolas, 76520 Franqueville (FR)
(74) Mandataire: Jolly, Jean-Pierre

(56) Documents cités:
- FR-A- 2 324 678
- FR-A- 2 468 717
- US-A- 4 257 934

## Description

La présente invention concerne une nouvelle composition d'élastomère. L'invention concerne également l'utilisation de cette composition pour réaliser un revêtement d'agent glissant, appelé à être au contact d'une vitre coulissante.

De tels profilés sont utilisés, en particulier, dans le domaine de l'industrie automobile, où l'on distingue :
- les profilés dits "coulisses", destinés à équiper les encadrements de vitre mobile et qui comportent une partie à section en U, apte à guider la vitre dans ses déplacements et à la recevoir de façon étanche en position de fermeture ;
- et les profilés dits "lécheurs", ainsi nommés parcequ'ils comportent une lèvre, qui lèche la face externe de la vitre mobile, dans une direction perpendiculaire ou inclinée par rapport à celle de son mouvement, et qui assure l'étanchéité à l'air et à l'eau au cours des déplacements de cette vitre.

Ces profilés ne doivent pas perturber les mouvements de la vitre coulissante, mais assurer une parfaite étanchéité au contact de celle-ci, et, dans ce but, la surface destinée à venir au contact de la vitre comporte habituellement un revêtement.

On a ainsi proposé de floquer des fibres synthétiques sur la surface venant au contact de la vitre coulissante.

On a aussi proposé d'enduire cette surface d'un vernis rigide, servant d'agent glissant, ce vernis étant par exemple constitué de polyuréthane ou de silicone, en mélange avec des particules solides.

On a aussi envisagé d'encoller la surface avec un film de polytétrafluoroéthylène, commercialisé sous la marque déposée Teflon, dont les propriétés antiadhérentes sont bien connues dans la technique.

On a enfin suggéré de revêtir les surfaces à traiter de matériaux autolubrifiants, notamment de mélanges graphités et de résines plastiques (polyoléfines).

Certaines de ces solutions, notamment certains vernis, se révèlent satisfaisantes sur le plan technique, mais leur coût est très élevé et leur mise en oeuvre délicate.

D'autres, moins coûteuses, ne satisfont pas en revanche aux exigences d'endurance et de durée de vie des fabricants d'automobiles.

La présente invention vise à remédier à ces inconvénients en proposant d'utiliser, pour réaliser la surface appelée à venir au contact de la vitre, une composition d'élastomère d'une dureté élevée, égale au moins à 50 Shore D, et qui n'en présente pas moins certaines propriétés de déformation et d'allongement convenant à l'utilisation envisagée.

A cet effet, l'invention a pour premier objet une composition d'élastomère comprenant, en p h r (parties pour 100 parties de l'ensemble des résines et/ou élastomères présents dans la composition), entre 5 et 15 p h r d'E.P.D.M. (éthylène propylène diène monomère), entre 30 et 50 p h r de caoutchouc styrène butadiène (SBR) et entre 40 et 60 p h r d'une résine styrènique, cette composition étant caractérisée en ce qu'elle contient une quantité de noir de carbone égale au plus à 2 p h r.

Le noir de carbone est présent habituellement dans de telles compositions à des teneurs beaucoup plus importantes, car il joue le rôle de charge renforçante et durcissante et il améliore certaines propriétés de la composition de caoutchouc, telles que résistance à la rupture et au déchirement.

Pour l'application de cette composition envisagée dans la cadre de la présente invention, on exige une dureté élevée et celle-ci est normalement supérieure à 50 Shore D et avantageusement comprise entre 60 et 70 Shore D, mais la surface du profilé entrant au contact de la vitre mobile doit pouvoir aussi supporter une déformation locale et s'allonger ou s'étirer sous la sollicitation de la vitre coulissante. La composition conforme à l'invention permet de répondre à ces exigences, comme on le verra ci-après.

De façon connue en soi, la composition conforme à l'invention contiendra de 10 à 50 p h r de talc et également entre 1 et 3 p h r d'un agent du type amine ou mercaptobenzimidazole, entre 7 et 9 p h r de soufre et des accélérateurs divers tels que triazole, sulfènamide et guanidine.

Les profilés du type coulisse ou lécheur comportant une lèvre déformable élastiquement, en un élastomère ou en un plastomère, dont au moins la partie de surface appelée à venir en contact avec une vitre mobile est constituée par un revêtement de la composition ci-dessus, constituent un autre objet de la présente invention.

La partie de surface d'une telle lèvre pourra avoir une épaisseur comprise entre environ 0,1 et environ 1 mm et cette épaisseur pourra varier localement sur une même lèvre, ce que l'on ne peut obtenir par des techniques usuelles avec des vernis ou autres compositions.

La composition conforme à l'invention est particulièrement bien adaptée à une telle utilisation, car ses constituants sont ceux d'une composition classique d'élastomère et elle peut être coextrudée aisément avec le reste du profilé, en utilisant des dispositifs usuels d'extrusion. Elle ne laisse ni dépôt noir, ni tache, ni aucune autre trace, en frottant contre une vitre. On notera en outre qu'elle ne contient pas de silicone.

La résistance à la rupture de la composition conforme à l'invention est supérieure à 14 MPa et son allongement est supérieur à 100 %. Son coefficient de frottement est inférieur à 0,5.

L'invention apporte donc un moyen simple, peu coûteux et facile à mettre en oeuvre, pour conférer les qualités de glissement requises à la surface d'une lèvre d'un profilé appelée à venir au contact d'une vitre coulissante.

## Revendications

1. Composition d'élastomère comprenant, en p h r (parties pour 100 parties de l'ensemble des résines et/ou élastomères présents dans la composition), entre 5 et 15 p h r d'E.P.D.M. (éthylène propylène diène monomère), entre 30 et 50 p h r de caoutchouc styrène butadiène (SBR) et entre 40 et 60 p h r d'une résine styrènique, cette composition étant **caractérisée en ce qu'**elle contient une quantité de noir de carbone égale au plus à 2 p h r.

2. Composition selon la revendication 1, **caractérisée en ce qu'**elle contient entre 10 et 50 p h r de talc.

3. Composition selon l'une des revendications 1 1 et 2, **caractérisée en ce qu'**elle présente une dureté supérieure à 50 Shore D et, de préférence, comprise entre 60 et 70 Shore D, une résistance à la rupture supérieure à 14 MPa, un allongement supérieur à 100 % et un coefficient de frottement inférieur à 0,5.

4. Profilé du type dit "coulisse" ou "lécheur" comprenant au moins une lèvre déformable élastiquement, en un élastomère ou en un plastomère, destinée à venir au contact d'une vitre coulissante, **caractérisé en ce que** la surface de cette lèvre appelée à venir au contact de la vitre coulissante comprend un revêtement en une composition selon l'une des revendications 1 à 3.

5. Profilé selon la revendication 4, **caractérisé en ce que** la lèvre et le revêtement sont issus d'une opération de coextrusion.

6. Profilé selon l'une des revendications 4 et 5 **caractérisé en ce que** l'épaisseur du revêtement est comprise entre environ 0,1 et environ 1 mm.

7. Profilé selon la revendication 6, **caractérisé en ce que** l'épaisseur du revêtement de la lèvre varie localement.

## Patentansprüche

1. Elastomerzusammensetzung, die in phr (Teile pro 100 Teile der Gesamtheit der in der Zusammensetzung vorliegenden Harze und/oder Elastomere) zwischen 5 und 15 phr EPDM (Ethylenpropylendienmonomer), zwischen 30 und 50 phr Styrolbutadienkautschuk (SBR) und zwischen 40 und 60 phr Styrolharze enthält, wobei diese Zusammensetzung **dadurch gekennzeichnet ist, daß** sie eine Menge Ruß von höchstens gleich 2 phr enthält.

2. Zusammensetzung nach Anspruch 1, **dadurch gekennzeichnet, daß** sie zwischen 10 und 50 phr Talk enthält.

3. Zusammensetzung nach einem der Ansprüche 1 und 2, **dadurch gekennzeichnet, daß** sie eine Härte über 50 Shore D und vorzugsweise zwischen 60 und 70 Shore D, eine Reißfestigkeit über 14 MPa, eine Dehnung über 100% und einen Reibungskoeffizient unter 0,5 aufweist.

4. "Gleit"- oder "Leck"-Profil, das mindestens eine elastisch verformbare Lippe aus einem Elastomer oder aus einem Plastomer aufweist, die dazu bestimmt ist, mit einem Schiebefenster in Kontakt zu kommen, **dadurch gekennzeichnet, daß** die Oberfläche dieser mit dem Schiebefenster in Kontakt kommenden Lippe eine Beschichtung aus einer Zusammensetzung nach einem der Ansprüche 1 bis 3 aufweist.

5. Profil nach Anspruch 4, **dadurch gekennzeichnet, daß** die Lippe und die Beschichtung aus einem Koextrusionsvorgang hervorgehen.

6. Profil nach einem der Ansprüche 4 und 5, **dadurch gekennzeichnet, daß** die Dicke der Beschichtung zwischen etwa 0,1 und etwa 1 mm beträgt.

7. Profil nach Anspruch 6, **dadurch gekennzeichnet, daß** die Dicke der Beschichtung der Lippe örtlich variiert.

## Claims

1. Elastomer composition comprising, in phr (parts per 100 parts of the combination of resins and/or elastomers present in the composition), between 5 and 15 phr of EPDM (ethylene-propylene-diene monomer), between 30 and 50 phr of styrene-butadiene rubber (SBR) and between 40 and 60 phr of a styrene resin, this composition being **characterized in that** it contains an amount of carbon black equal to at most 2 phr.

2. Composition according to Claim 1, **characterized in that** it contains between 10 and 50 phr of talc.

3. Composition according to either of Claims 1 and 2, **characterized in that** it has a Shore D hardness of greater than 50, preferably between 60 and 70, a tensile strength of greater than 14 Mpa, an elongation of greater than 100% and a friction coefficient of less than 0.5.

4. Sealing strip of the "slide-channel" or "window-hugging" type, which includes at least one elastically deformable lip, made of an elastomer or a plastomer, intended to come into contact with a sliding window pane, **characterized in that** the surface of this lip designed to come into contact with the sliding window pane includes a coating made of a composition according to one of Claims 1 to 3.

5. Sealing strip according to Claim 4, **characterized in that** the lip and the coating are obtained by a coextrusion operation.

6. Sealing strip according to either of Claims 4 and 5, **characterized in that** the thickness of the coating is between about 0.1 mm and about 1 mm.

7. Sealing strip according to Claim 6, **characterized in that** the thickness of the lip coating varies locally.
